# EUROPÄISCHE PATENTSCHRIFT

(11) **EP 2 895 290 B1**
(45) Veröffentlichungstag und Bekanntmachung des Hinweises auf die Patenterteilung: **29.08.2018**
(21) Anmeldenummer: 13765988.4
(22) Anmeldetag: 17.09.2013
(51) Int. Cl.: B23F 23/12, B23F 19/00, B23F 19/05

(54) **VERFAHREN ZUM MODIFIZIEREN DER FLANKEN EINES ZAHNS EINES ZAHNRADS MIT HILFE EINES WERKZEUGS**
METHOD FOR MODIFYING THE FLANKS OF A TOOTH OF A GEAR WHEEL WITH THE AID OF A TOOL
PROCÉDÉ POUR MODIFIER LES FLANCS D'UNE DENT D'UNE ROUE DENTÉE À L'AIDE D'UN OUTIL

(30) Priorität: 17.09.2012 DE 102012108717
(43) Veröffentlichungstag der Anmeldung: 22.07.2015
(73) Patentinhaber: Präwema Antriebstechnik GmbH, 37269 Eschwege/Werra (DE)
(72) Erfinder: SCHIEKE, Jörg, 99092 Erfurt-Marbach (DE)
(74) Vertreter: Cohausz & Florack
(86) Internationale Anmeldenummer: PCT/EP2013/069256
(87) Internationale Veröffentlichungsnummer: WO 2014/041191

(56) Entgegenhaltungen:
- EP-A1- 1 084 786
- EP-A2- 0 993 908
- DE-A1-102007 043 402
- DE-A1-102010 024 366
- DE-U1-202007 006 219

## Beschreibung

Die Erfindung betrifft ein Verfahren zum Modifizieren der Geometrie der Zahnflanken eines Zahnrads mit Hilfe eines Werkzeugs, das eine mit den Zähnen des Zahnrads während einer Feinbearbeitung in Eingriff kommende Verzahnung ausweist.

Aus der DE 10 2007 043 402 A1 ist es bekannt, dass sich Korrekturen am Profil des jeweils feinzubearbeitenden Zahnrads auf besonders wirtschaftlich und gleichzeitig unter technologischen Gesichtspunkten besonders effektive Weise dadurch vornehmen lassen, dass in das für die Feinbearbeitung verwendete Werkzeug beim Abrichten die für die jeweilige Geometrieänderung erforderlichen Formelemente eingearbeitet werden. Dabei besteht die Besonderheit dieses bekannten Verfahrens darin, dass zum Abrichten ein schmales Abrichtrad verwendet wird, dessen Breite verglichen mit der Breite des jeweils zu bearbeitenden Zahns optimaler Weise so gering ist, dass das Abrichtrad beim Abrichtvorgang die zu bearbeitende Zahnflanke lediglich in einer Linienberührung oder mit einem auf einen Punkt reduzierten Kontaktzone überstreicht. Durch die Verwendung eines derart schmalen Abrichtrades kann alleine durch eine entsprechende Bewegung des Abrichtrades die Gestalt des abzurichtenden Werkzeugs so geformt werden, dass bei der anschließenden Feinbearbeitung eines Zahnrads mit dem solcherart abgerichteten Werkzeug Profilkorrekturen am bearbeiteten Zahnrad erzeugt werden. Die Form des schmalen Abrichtrades muss weder in allen Parametern mit der Werkstückverzahnung übereinstimmen noch müssen aufwändige zusätzliche Steuerungsmöglichkeiten in der jeweiligen Abrichtvorrichtung vorhanden sein. Eine vergleichbare Vorgehensweise ist in der DE 10 2007 043 384 für die Korrektur der Flankenlinie eines Zahnrads vorgeschlagen worden.

Es ist bekannt, dass das Einsatzverhalten von Stirnradverzahnungen nicht nur durch die mit den voranstehend beschriebenen Verfahren erzeugbare Makrogeometrie, sondern auch durch gezielt eingebrachte Flankenmodifikationen oder verfahrensbedingte eintretende Formabweichungen maßgeblich beeinflusst werden können. Zu diesen Formabweichungen gehören die so genannten "Verschränkungen", bei denen es sich um Verwindungen der Zahnflanken handelt. Verschränkungen sind in der Regel unerwünscht, können jedoch auch gezielt eingebracht werden, um beispielsweise die Laufeigenschaften von Zahnrädern zu verbessern.

Vor dem Hintergrund des voranstehenden Standes der Technik bestand die Aufgabe der Erfindung darin, ein Verfahren anzugeben, mit dem sich auch komplexe Flankenmodifikationen auf wirtschaftliche Weise erzeugen lassen.

Diese Aufgabe ist erfindungsgemäß durch das in Anspruch 1 angegebene Verfahren gelöst worden.

Vorteilhafte Ausgestaltungen dieses Verfahrens sind in den auf Anspruch 1 rückbezogenen Ansprüchen angegeben und werden nachfolgend wie der allgemeine Erfindungsgedanke näher erläutert.

Das erfindungsgemäße Verfahren zum Modifizieren der Geometrie der Zahnflanken eines Zahnrads mit Hilfe eines Werkzeugs, das eine mit den Zähnen des Zahnrads während einer Feinbearbeitung in Eingriff kommende Verzahnung ausweist, umfasst demnach in Übereinstimmung mit dem eingangs angegebenen Stand der Technik folgende Arbeitsschritte:
a) Formen eines Profils an dem Werkzeug, das über der Breite des Werkzeugs variiert, indem ein Abrichtrad während eines Abrichtvorgangs entlang der Zahnflanke des jeweils abzurichtenden Zahns bewegt wird, wobei die Breite der mit dem abzurichtenden Werkzeug in Eingriff kommenden Zähne des Abrichtrads um so viel kleiner als die Breite des abzurichtenden Werkzeugs ist, dass das Abrichtrad zum Überstreichen der Breite des abzurichtenden Werkzeugs um eine Länge in Z-Richtung bewegt werden muss, die einem Vielfachen der Breite der Zähne des Abrichtrades entspricht, und
b) Feinbearbeiten des Zahnrades mit dem in dieser Weise abgerichteten Werkzeug.

Erfindungsgemäß wird das Abrichtrad nun zusätzlich zu der im Stand der Technik während des Arbeitsschritts a) ausgeführten Bewegung mit einer sich ändernden Steigung und einem sich ändernden Achskreuzwinkel bezogen auf das abzurichtende Werkzeug entlang der jeweiligen Zahnflanke des jeweils abzurichtenden Werkzeugs bewegt, d.h. in einer parallel zur Drehachse des Werkzeugs ausgerichteten Richtung (Z-Richtung) axial durch die jeweilige Zahnlücke bewegt, um in das Werkzeug die jeweilige Modifikation der Zahnflankengeometrie einzubringen.

Anschließend erfolgt dann die Feinbearbeitung des Zahnrads im Arbeitsschritt b) unter Ausgleich des sich über der Breite des Werkzeugs ändernden Schrägungswinkels des Werkzeugs durch eine vom Schrägungswinkel des Werkzeugs abhängige Korrektur des Achskreuzwinkels im Bearbeitungsprozess.

Auch die vorliegende Erfindung basiert somit auf dem Gedanken, zum Abrichten eines Werkzeugs für die Feinbearbeitung von Zahnrädern mit unbestimmter Schneide ein gegenüber der Breite des abzurichtenden Werkzeugs sehr schmales Abrichtrad zu verwenden. Dementsprechend werden auch gemäß der Erfindung durch die während des Abrichtvorgangs ausgeführten Bewegungen des schmalen Abrichtrads am abzurichtenden Werkzeug die Formelemente ausgeprägt, die für die gewünschte Modifikation der Flanken der Zähne des jeweils von dem Werkzeug feinzubearbeitenden Zahnrads benötigt werden.

Die Form des erfindungsgemäß schmalen Abrichtrades muss dazu weder in allen Parametern mit der Werkstückverzahnung übereinstimmen, noch müssen aufwändige zusätzliche Steuerungsmöglichkeiten in der jeweiligen Abrichtvorrichtung vorhanden sein. Stattdessen kann bei Verwendung eines erfindungsgemäß schmalen Abrichtrades beispielsweise gezielt eine für die Korrektur einer ungewünschten Verschränkung oder eine für die gezielte Erzeugung einer solchen Verschränkung erforderliche Form in das abzurichtende Werkzeug eingebracht werden, indem während des Überfahrens der jeweils abzurichtenden Flanke des Werkzeugs das schmale Abrichtrad unter einem Achskreuzwinkel bewegt wird, der über die Breite der jeweiligen Flanke geändert wird. Dabei kann der Grad der für den Ausgleich oder die Erzeugung der jeweiligen Flankenmodifikation erforderlichen Verstellung des Achskreuzwinkels im Voraus berechnet werden und anschließend in der betrieblichen Anwendung des erfindungsgemäßen Verfahrens durch die Maschinensteuerung und einen geeigneten Schwenkantrieb bewerkstelligt werden, der das Werkzeug und das Abrichtrad während des Abrichtvorgangs um eine radial gerichtete Achse (Y-Achse) relativ zueinander verschwenkt. Abhängig von den an der jeweiligen Bearbeitungsmaschine zur Verfügung stehenden Schwenkachsen können dazu in der Praxis das Werkzeug in Bezug auf ein hinsichtlich der Schwenkbewegung stillstehendes Abrichtrad, das Abrichtrad in Bezug auf ein hinsichtlich der Schwenkbewegung stillstehendes Werkzeug oder Abrichtrad und Werkzeug gleichzeitig um die Y-Achse verschwenkt werden.

Auf erfindungsgemäße Weise können Änderungen des Profils über der Verzahnungsbreite des Werkzeugs, wie beispielsweise Verschränkungen, in das abzurichtende Werkzeug eingebracht werden, um so am von dem Werkzeug zu bearbeitenden Werkstück die betreffenden Modifikationen der Flankentopologie zu korrigieren oder gezielt einzubringen.

Bei der folgenden Feinbearbeitung eines Werkstücks mit einem derart abgerichteten Hartfeinbarbeitungswerkzeug (Arbeitsschritt b)) erfolgt unter Ausgleich des sich über der Breite des Werkzeugs ändernden Schrägungswinkels des Werkzeugs eine vom Schrägungswinkel des Werkzeugs abhängige Modifikation des Achskreuzwinkels im Bearbeitungsprozess. Am fertig feinbearbeiteten Werkstück lassen sich so eine Verschränkung oder andere Flankenmodifikationen abbilden, ohne dass die Flankenmodifikationen in ein komplex geformtes Abrichtwerkzeug eingebracht sein müssen.

Die Vorteile der Verwendung eines erfindungsgemäß schmalen Abrichtwerkzeuges bestehen auch darin, dass durch die geringe Breite des Abrichtwerkzeugs geringere Fertigungskosten entstehen. Dies verringert die Herstellkosten. Durch den bei einem erfindungsgemäß schmalen Abrichtwerkzeug erzielten intensiven Kontakt zwischen Abrichtrad und abzurichtendem Werkzeug wird ein effektiver Späneabtransport und damit einhergehend eine besonders saubere Oberfläche an den jeweils bearbeiteten Zahnrädern erzielt. Die stirnseitigen Schnittkanten des Abrichtrades können dabei profiliert sein, um Korrekturen der Form des abzurichtenden Werkzeugs auf besonders einfache Weise über die bahngesteuerten Bewegungsachsen der jeweiligen Abrichtmaschine durchführen zu können.

Beim Abrichten des jeweiligen Feinbearbeitungswerkzeugs wird die Relativposition von Abrichtrad und Werkzeug mittels geeigneter Stellantriebe in der parallel der Drehachse des Abrichtrades ausgerichteten Richtung (Z-Richtung) und/oder einer dazu quer ausgerichteten Richtung (X-Richtung) sowie erforderlichenfalls durch zusätzliche Verdrehung um die Drehachse (B-Achse) des zu bearbeitenden Werkzeugs und/oder um die Drehachse (C-Achse) des Abrichtrades verstellt, um die gewünschte Flankenform (Balligkeit, Konizität) der Zähne des abzurichtenden Werkzeugs zu erzeugen. Zusätzlich wird das Abrichtrad um eine radial nach außen gerichtete Schwenkachse (Y-Achse) verdreht, so dass die Abrichtbearbeitung der jeweiligen Zahnflanke mit sich in Breitenrichtung (Z-Richtung) des jeweiligen Zahns ändernden Achskreuzwinkel erfolgt und an der jeweiligen Zahnflanke die zum Ausgleich von Verschränkungen oder zum gezielten Einbringen von Verschränkungen in die Zahnflanken der Zähne des jeweils feinzubearbeitenden Werkstücks erforderlichen Modifikationen der Zahnflankentopologie eingeformt werden.

Die erfindungsgemäß vorgesehene Änderung des Achskreuzwinkels während der Abrichtbearbeitung kann dadurch bewerkstelligt werden, dass ein individuell steuerbarer Stellantrieb zum Verstellen der Relativposition von Abrichtrad und Werkzeug bezogen auf eine in Bezug auf das abzurichtende Werkzeug radial gerichtete Achse (Y-Achse) vorgesehen ist.

Durch die Verstellbarkeit in X-Richtung kann die Steigung der Zähne des abzurichtenden Werkzeugs über deren Breite variiert werden. Um auch über die Höhe der Zähne eine entsprechende Variation vornehmen zu können, kann es zweckmäßig sein, einen individuell steuerbaren Stellantrieb zum Verstellen der Relativposition in einer in Bezug auf das abzurichtende Werkzeug radial gerichteten Richtung (Y-Richtung) vorzusehen. Auf diese Weise werden die Möglichkeiten der Flankenmodifikation zusätzlich erweitert.

Die geringe Breite des erfindungsgemäßen Abrichtrades erlaubt es dabei, die Zahnflanken des Abrichtrades unabhängig von der Gestalt und Ausrichtung der Zahnflanken des zu bearbeitenden Werkzeugs so zu gestalten, dass die jeweilige Kontaktfläche zwischen abzurichtendem Werkzeug und Abrichtrad auf ein Minimum reduziert ist. Insbesondere ist in dem Fall, dass ein schrägverzahntes Werkzeug mit einem erfindungsgemäß schmalen Abrichtrad bearbeitet wird, an dem Abrichtrad nicht der Schrägungswinkel des vom abzurichtenden Werkzeug zu bearbeitenden Werkstücks abgebildet, sondern allenfalls nur angenähert.

Auch beim erfindungsgemäß erfolgenden Abrichten von schrägverzahnten oder in anderer Weise komplex geformt verzahnten Werkzeugen wird demzufolge der jeweilige Schrägungswinkel bzw. die jeweils abzubildende Zahnform durch die Bewegung des Abrichtrades bestimmt, die das Abrichtrad bei seinem Weg entlang der Zahnflanke des Zahns ausführt, mit dem es jeweils in Eingriff steht. Die erfindungsgemäße Vorgehensweise gestattet es auf diese Weise, mittels der an konventionellen Feinbearbeitungsmaschinen standardmäßig vorhandenen Verstellmöglichkeiten in X- und Z-Richtung, die Verschwenkung um die B- und C-Achse sowie um die zusätzlich vorgesehene Y-Schwenkachse die am jeweils bearbeiteten Zahn zu erzeugende Form allein durch die Maschinensteuerung vorzugeben.

Wenn hier davon die Rede ist, dass das erfindungsgemäß eingesetzte Abrichtrad möglichst schmal sein soll, so bedeutet dies, dass seine Breite optimaler Weise so reduziert ist, dass seine den Zahnflanken des abzurichtenden Werkzeugs zugeordneten Zahnflanken nach Art einer Messerschneide ausgebildet sind oder zumindest so schmal sind, dass jeweils nur eine minimale Überdeckungsfläche zwischen den Zahnflanken des Abrichtrades und den Flankenflächen des zu bearbeitenden Werkzeugs gegeben ist. Dementsprechend sieht eine vorteilhafte Ausgestaltung der Erfindung vor, dass die Breite der mit dem abzurichtenden Werkzeug in Eingriff kommenden Zähne des Abrichtrades höchstens einem Fünftel, bevorzugt höchstens einem Achtel, der Breite des abzurichtenden Werkzeugs entspricht. Folglich tritt gemäß der Erfindung das Werkzeug an der einen Werkstück-Stirnfläche in die von der jeweils zu modifizierenden Flanke begrenzte Zahnlücke ein und wird anschließend in Z-Richtung entlang der betreffenden Flanke bewegt, bis es am der anderen Werkstück-Stirnfläche zugeordneten Ende wieder aus der Zahnlücke austritt.

Um einerseits das in Z-Richtung erfolgende Einfahren des erfindungsgemäß schmalen Abrichtrades in das abzurichtende Werkzeug und andererseits eine größtmögliche Gestaltungsfreiheit bei der Abrichtbearbeitung der Zähne des Werkzeugs zu ermöglichen, ist bei einer praxisgerechten Ausgestaltung der Erfindung das Modul des Abrichtrades gleich dem Modul des von dem abzurichtenden Werkzeug feinzubearbeitenden Zahnrads.

Die durch das erfindungsgemäße Verfahren eröffneten Möglichkeiten der Beeinflussung der Formen der Zähne des abzurichtenden Werkzeugs lassen sich insbesondere dann besonders effektiv nutzen, wenn das abzurichtende Werkzeug ringförmig ausgebildet und innenverzahnt für die Feinbearbeitung von außenverzahnten Zahnrädern bestimmt ist, wobei zum Abrichten eines solchen Werkzeugs ein entsprechend außenverzahntes Abrichtrad eingesetzt wird. Die durch die Verwendung eines erfindungsgemäß schmalen Abrichtrades eröffneten Möglichkeiten gestatten insbesondere bei der Bearbeitung von Werkzeugen für die Feinbearbeitung von außenverzahnten Zahnrädern eine größtmögliche Bandbreite der Beeinflussung der jeweils zu erzeugenden Zahnform.

Mit der Erfindung steht somit ein Verfahren zur Verfügung, das es auf einfache Weise erlaubt, nicht nur die Flankenlinien des abzurichtenden Werkzeugs zu modifizieren, sondern das abzurichtende Werkzeug auch so zu formen, dass Verschränkungen und andere komplexe Flankenmodifikationen am mit dem erfindungsgemäß abgerichteten Werkzeug feinzubearbeitenden Zahnrad erzielt werden können.

Nachfolgend wird die Erfindung anhand von Ausführungsbeispielen näher erläutert. Es zeigen jeweils schematisch:
- Fig. 1: eine Vorrichtung zum Abrichten eines Werkzeugs zum Honbearbeiten eines außenverzahnten Zahnrads;

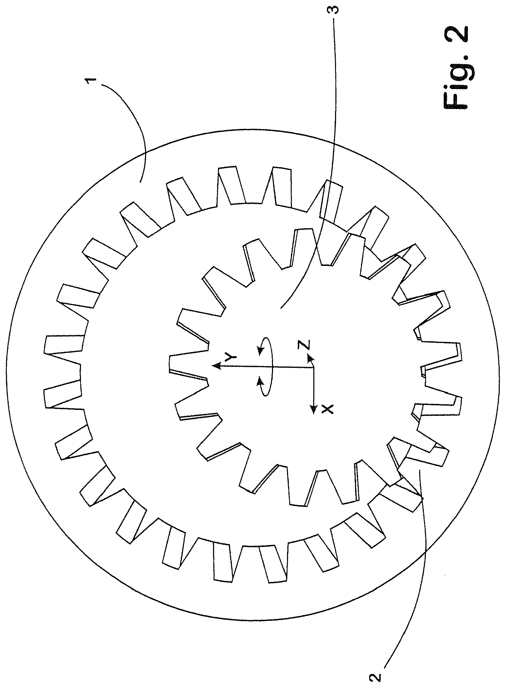

- Fig. 2: die Vorrichtung gemäß Fig. 1 in einer seitlichen Ansicht;

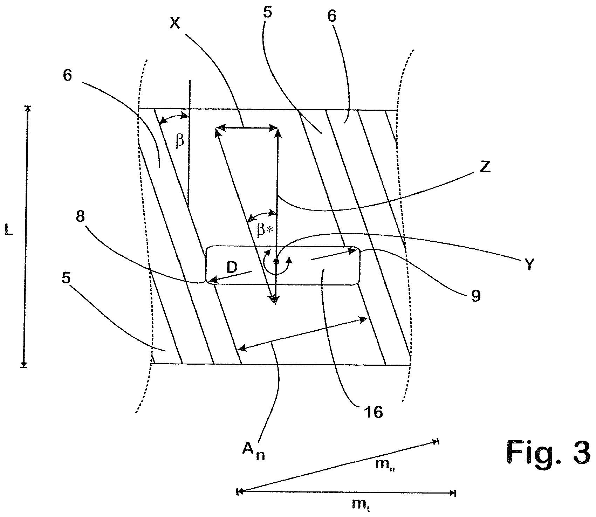

- Fig. 3: einen Ausschnitt des mit dem Werkzeug in Eingriff stehenden Abrichtrades von oben;

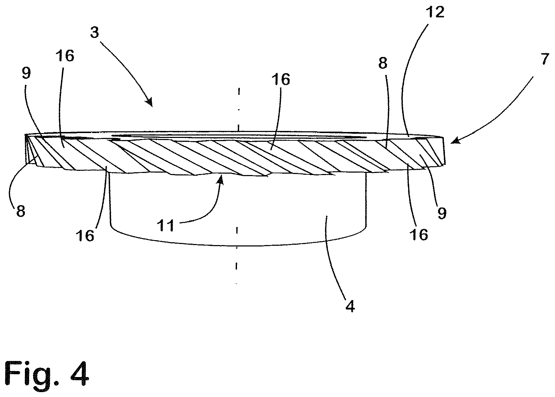

- Fig. 4: ein in der Vorrichtung gemäß Fig. 1 verwendetes Abrichtrad in einer perspektivischen Darstellung;

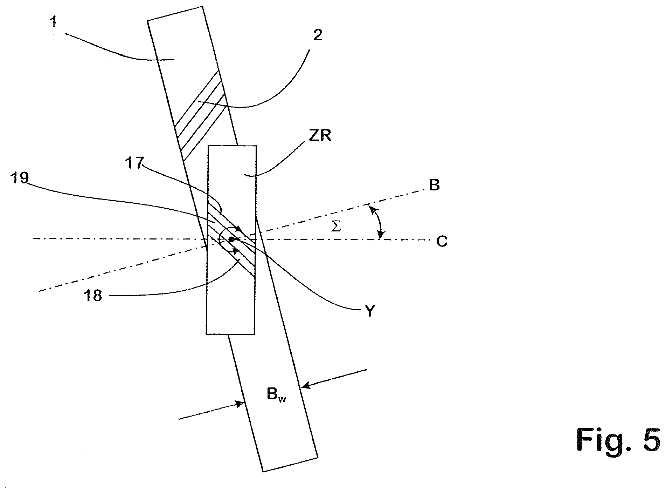

- Fig. 5: die Vorrichtung gemäß Fig. 1 bei der Feinbearbeitung des außenverzahnten Zahnrads.

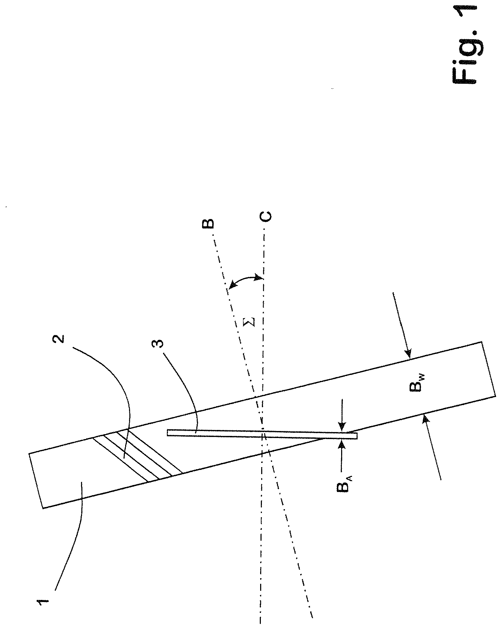

Das in Fig. 1 gezeigte Werkzeug 1 ist zum Honen der Verzahnung eines außenschrägverzahnten Zahnrads Z bestimmt. Zu diesem Zweck ist es ringförmig ausgebildet und weist eine Innenschrägverzahnung 2 auf.

Zum Abrichten des Werkzeugs 1 ist ein Abrichtrad 3 vorgesehen.

Die Breite B_{A} des Abrichtrades 3 beträgt typischerweise weniger als ein Achtel der Breite B_{W} des abzurichtenden Werkzeugs 1. Dementsprechend beträgt die Länge L, um die das Abrichtrad 3 in Richtung seiner Drehachse C (Bewegungsachse Z bzw. Z-Richtung) bewegt werden muss, um die Breite B_{W} des Werkzeugs 1 zu überstreichen, mehr als das Achtfache der Breite B_{A} des Abrichtrades 3.

Weder die räumliche Zuordnung noch die Breitenverhältnisse sind in den Figuren maßstäblich richtig dargestellt

Zur Verstellung des Abrichtrades in Z-Richtung und der dazu quer ausgerichteten X-Richtung (Bewegungsachse X) relativ zum abzurichtenden Werkzeug 1 sind hier nicht gezeigte individuell steuerbare Stelleinrichtungen vorgesehen, wie sie an konventionellen Maschinen dieser Art regelmäßig vorhanden sind. Zusätzlich kann die Steigung der um die B- und/oder C-Achse vom abzurichtenden Werkzeug 1 bzw. vom Abrichtrad 3 vollführten Drehungen verändert werden. Dies kann mittels der voneinander unabhängigen Antriebe erfolgen, die zum Drehen von Abrichtrad 3 und abzurichtendem Werkzeug 1 um die ihnen jeweils zugeordnete Drehachse C bzw. B vorgesehen sind.

Während des Abrichtbetriebes steht die Drehachse C des Abrichtrades 3 unter einem Achskreuzwinkel ∑ zur Drehachse B des abzurichtenden Werkzeugs 1. Um den Achskreuzwinkel ∑ während der Bewegung des Abrichtrads 3 entlang der jeweils abzurichtenden Zahnflanke 5 variieren zu können, sind das Abrichtrad 3 und das Werkzeug 1 mittels eines weiteren individuell gesteuerten Stellantriebs um eine Schwenkachse Y relativ zueinander verschwenkbar, die in Bezug auf das abzurichtende Werkzeug 1 radial nach außen gerichtet auf der durch die Z- und X-Bewegungsachsen aufgespannte Ebene steht.

Die für die Bewegung in X- und Z-Richtung zuständigen Stelleinrichtungen sowie die Antriebe für die Drehungen um die B-, C- und Y-Achsen werden über eine hier ebenfalls nicht gezeigte frei programmierbare Maschinensteuerung gesteuert.

Die Flanken 5 der Zähne 6 des abgerichteten Werkzeugs 1 sind unter einem Schrägungswinkel β schräg zur Drehachse B des Werkzeugs 1 ausgerichtet.

Die jeweilige größte Diagonale D der im Querschnitt in ihrer Grundform rechtwinklig ausgebildeten schmalen Zähne 16 des Abrichtrades 3 entspricht im Wesentlichen dem jeweiligen Normalabstand Aₙ der Flanken 5 der Zähne 6 des abzurichtenden Werkzeugs 1. Auf diese Weise berührt der jeweils in Eingriff befindliche Zahn 16 des Abrichtrades 3 die einander zugeordneten Flanken 5 der benachbart angeordneten Zähne 6 des abzurichtenden Werkzeugs 1 jeweils nur punktförmig mit seinen diagonal gegenüberliegenden Kanten 8,9.

Um diese Bearbeitung unter den genannten Einstellungen auszuführen, wird das jeweils zu bearbeitende Zahnrad ZR an Stelle des Abrichtrades 3 in die jeweilige Vorrichtung gesetzt und mittels des in der voranstehend beschriebenen Weise abgerichteten Werkzeugs 1 unter den ebenfalls voranstehend erläuterten Einstellungen und Bearbeitungsbedingungen an dem Zahnrad Z eine Honbearbeitung durchgeführt. Dabei wird die zuvor mittels des Abrichtrads 3 an dem Honwerkzeug 1 abgebildete Flankenmodifikation auf das Zahnrad ZR übertragen. Auf diese Weise weisen die Zahnflanken 17,18 der Zähne 19 des Zahnrads ZR nach Beendigung der durch das Werkzeug 1 vorgenommenen Honbearbeitung die betreffende Modifikation auf, obwohl sie am erfindungsgemäß eingesetzten Abrichtrad 3 nicht vorhanden sind, sondern erfindungsgemäß alleine durch mittels der Maschinensteuerung um die Achsen X, Y, Z und B, C vorgenommenen Änderungen der Relativposition am Hartfeinbearbeitungswerkzeug 1 abgebildet worden sind.

Bei dem erfindungsgemäßen Verfahren zum Modifizieren der Geometrie von Zahnflanken eines Zahnrads ZR mit Hilfe eines Werkzeugs 1, das eine während der Feinbearbeitung mit dem Zahnrad ZR in Eingriff kommende Verzahnung aufweist, wird somit ein über der Breite B_{W} des Werkzeugs 1 variiertes Profil am Werkzeug 1 erzeugt, indem während eines Abrichtvorgangs entlang der Zahnflanke 5 des abzurichtenden Zahns 6 ein Abrichtrad 3 bewegt wird. Die Breite der Zähne 16 des Abrichtrads 3 ist dabei viel kleiner als die Breite B_{W} des Werkzeugs 1. Daher muss das Abrichtrad 3 zum Überstreichen der Breite B_{W} des Werkzeugs 1 um eine einem Vielfachen der Breite B_{A} der Zähne 16 des Abrichtrades 3 entsprechende Länge L bewegt werden. Nach dem Abrichten erfolgt das Feinbearbeiten des Zahnrades ZR mit dem Werkzeug 1. Indem dabei das Abrichtrad 3 mit einer sich ändernden Steigung und einem sich ändernden Achskreuzwinkel ∑ bezogen auf das Werkzeug 1 bewegt wird, lässt sich in das Werkzeug 1 die Modifikation der Zahnflankengeometrie abbilden. Bei der anschließenden Feinbearbeitung erfolgt im Bearbeitungsprozess unter Ausgleich des sich über der Breite der Zähne 16 des Werkzeugs ändernden Schrägungswinkels des Werkzeugs 1 eine vom Schrägungswinkel des Werkzeugs 1 abhängige Modifikation des Achskreuzwinkels ∑.

### BEZUGSZEICHEN

- 1: ringförmiges Werkzeug zum Honen der Verzahnung eines außenschrägverzahnten Zahnrads
- 2: Innenschrägverzahnung des Werkzeugs 1
- 3: Abrichtrad
- 4: Träger des Abrichtrades 3
- 5: Zahnflanken der Zähne 6
- 6: Zähne des abzurichtenden Werkzeugs 1
- 7: Zahnflanken des Abrichtrades 3
- 8,9: Kanten im Bereich des Übergangs zwischen den Zahnflanken 7 und den Stirnseiten 11,12 des Abrichtrades 3
- 11,12: Stirnseiten des Abrichtrades 3
- 13,14: gewölbte Abschnitte
- 15: Flächenabschnitt
- 16: Zähne des Abrichtrads 3

- Aₙ: Normalabstand der Flanken 5
- β: Schrägungswinkel
- B: Drehachse des Werkzeugs 1
- β*: Winkel
- B_{A}: Breite des Abrichtrades 3
- B_{W}: Breite des abzurichtenden Werkzeugs 1
- C: Drehachse des Abrichtrades 3
- D: Diagonale
- L: Länge, um die das Abrichtrad 3 in Richtung seiner Drehachse C (Z-Richtung) bewegt werden muss, um die Breite B_{W} des Werkzeugs 1 zu überstreichen
- mₙ: Normalmodul
- mₜ: Stirnmodul des abzurichtenden Werkzeugs 1
- ∑: Achskreuzwinkel
- Y,X,Z: Bewegungsachsen
- ZR: Zahnrad

## Patentansprüche

1. Verfahren zum Modifizieren der Geometrie der Zahnflanken eines Zahnrads mit Hilfe eines Werkzeugs, das eine mit den Zähnen des Zahnrads während einer Feinbearbeitung in Eingriff kommende Verzahnung ausweist, wobei folgende Arbeitsschritte durchlaufen werden:
a) Formen eines über der Breite (B_{W}) des Werkzeugs (1) variierenden Profils an dem Werkzeug (1), indem ein Abrichtrad (3) während eines Abrichtvorgangs entlang der Zahnflanke (5) des jeweils abzurichtenden Zahns (6) bewegt wird, wobei die Breite (B_{A}) der mit dem abzurichtenden Werkzeug (1) in Eingriff kommenden Zähne (16) des Abrichtrades (3) um so viel kleiner als die Breite (B_{W}) des abzurichtenden Werkzeugs (1) ist, dass das Abrichtrad (3) zum Überstreichen der Breite (B_{W}) des abzurichtenden Werkzeugs (1) um eine Länge (L) in Z-Richtung bewegt werden muss, die einem Vielfachen der Breite (B_{A}) der Zähne (16) des Abrichtrades (3) entspricht, und
b) Feinbearbeiten des Zahnrades mit dem in dieser Weise abgerichteten Werkzeug (1),
**dadurch gekennzeichnet, dass** das Abrichtrad (3) während des Arbeitsschritts a) mit einer sich ändernden Steigung und einem sich ändernden Achskreuzwinkel (Σ) bezogen auf das abzurichtende Werkzeug (1) bewegt wird, um in das Werkzeug (1) die jeweilige Modifikation der Zahnflankengeometrie einzubringen, und **dass** die Feinbearbeitung des Zahnrads im Arbeitsschritt b) unter Ausgleich des sich über der Breite der Zähne (16) des Werkzeugs ändernden Schrägungswinkels des Werkzeugs (1) durch eine vom Schrägungswinkel des Werkzeugs (1) abhängige Modifikation des Achskreuzwinkels (Σ) im Bearbeitungsprozess erfolgt.

2. Verfahren nach Anspruch 1, **dadurch gekennzeichnet, dass** während des Abrichtens das schmale Abrichtrad (3)und das abzurichtende Werkzeug (1) über jeweils einen eigenen individuell steuerbaren Antrieb um jeweils eine Drehachse (B,C) drehend angetrieben werden.

3. Verfahren nach einem der voranstehenden Ansprüche, **dadurch gekennzeichnet, dass** individuell steuerbare Stellantriebe zum Verstellen der Relativposition von abzurichtendem Werkzeug (1) und Abrichtrad (3) in Richtung (Z-Richtung) der Drehachse (C) des Abrichtrades (3) sowie eine dazu quer ausgerichtete Richtung (X-Richtung) vorgesehen sind.

4. Verfahren nach einem der voranstehenden Ansprüche, **dadurch gekennzeichnet, dass** ein individuell steuerbarer Stellantrieb zum Verschwenken des Abrichtrads (3) oder des abzurichtenden Werkzeugs (1) um eine in Bezug auf das abzurichtende Werkzeug (1) radial gerichtete Achse (Y-Achse) schwenkbar ist.

5. Verfahren nach einem der voranstehenden Ansprüche, **dadurch gekennzeichnet, dass** ein individuell steuerbarer Stellantrieb zum Verstellen der Relativposition in einer in Bezug auf das abzurichtende Werkzeug radial gerichteten Richtung (Y-Richtung) vorgesehen ist.

6. Verfahren nach einem der voranstehenden Ansprüche, **dadurch gekennzeichnet, dass** die Breite (B_{A}) der mit dem anzurichtenden Werkzeug (1) in Eingriff kommenden Zähne (16) des Abrichtrades höchstens einem Fünftel der Breite (B_{W}) des abzurichtenden Werkzeugs (1) entspricht.

7. Verfahren nach Anspruch 6, **dadurch gekennzeichnet, dass** die Breite (B_{A}) der mit dem anzurichtenden Werkzeug (1) in Eingriff kommenden Zähne (16) des Abrichtrads (3) höchstens einem Achtel der Breite des abzurichtenden Werkzeugs entspricht.

8. Verfahren nach einem der voranstehenden Ansprüche, **dadurch gekennzeichnet, dass** beim Abrichten der jeweils im Eingriff mit dem abzurichtenden Werkzeug (1) befindliche Zahn (16) des Abrichtrades (3) in mindestens einem seiner Kantenbereiche das abzurichtende Werkzeug (1) punktförmig berührt.

9. Verfahren nach einem der Ansprüche 1 bis 7, **dadurch gekennzeichnet, dass** beim Abrichten der jeweils im Eingriff mit dem abzurichtenden Werkzeug (1) befindliche Zahn (16) des Abrichtrades (3) in mindestens einem seiner Kantenbereiche das abzurichtende Werkzeug (1) linienförmig berührt.

## Claims

1. Method for modifying the geometry of the tooth flanks of a gear wheel with the aid of a tool, which has a toothing engaging with the teeth of the gear wheel during a precision machining, wherein the following working steps are performed:
a) forming a profile on the tool (1) varying over the width (B_{W}) of the tool (1), in which a dressing wheel (3) is moved during a dressing procedure along the tooth flank (5) of the tooth (6) to be respectively dressed, wherein the width (B_{A}) of the teeth (16) of the dressing wheel (3) engaging with the tool to be dressed is smaller than the width (B_{W}) the tool (1) to be dressed to such an extent that, in order to cover the width (B_{W}) of the tool to be dressed, the dressing wheel (3) has to be moved by a length (L) in the Z direction that corresponds to a multiple of the width (B_{A}) of the teeth (16) of the dressing wheel (3), and
b) precision machining of the gear wheel with the tool (1) that has been dressed in this way,
**characterised in that** the dressing wheel (3) during the working step a) is moved with a changing pitch and a changing crossed axes angle (Σ) in relation to the tool (1) to be dressed, in order to incorporate the respective modification of the tooth flank geometry into the tool (1), and that the precision machining of the tooth in the working step b) takes place in the machining process by a modification of the crossed axes angle (Σ) dependent on the helical angle of the tool (1) with equalisation of the changing helical angle of the tool (1) over the width of the teeth (16) of the tool.

2. Method according to claim 1, **characterised in that** during the dressing the narrow dressing wheel (3) and the tool (1) to be dressed are rotatably driven respectively about a rotation axis (B, C) via respectively their own individually controllable drive.

3. Method according to one of the preceding claims, **characterised in that** individually controllable servo-drives are provided for adjusting the relative position of the tool (1) to be dressed and the dressing wheel (3) in the direction (Z direction) of the rotation axis (C) of the dressing wheel (3) as well as a direction (X direction) aligned transverse thereto.

4. Method according to one of the preceding claims, **characterised in that** an individually controllable servo-drive for swivelling the dressing wheel (3) or the tool (1) to be dressed can be swivelled about an axis (Y axis) radially aligned in relation to the tool (1) to be dressed.

5. Method according to one of the preceding claims, **characterised in that** an individually controllable servo-drive is provided for adjusting the relative position in a direction (Y direction) radially aligned in relation to the tool to be dressed.

6. Method according to one of the preceding claims, **characterised in that** the width (B_{A}) of the teeth (16) of the dressing wheel engaging with the tool (1) to be dressed corresponds at most to a fifth of the width (B_{W}) of the tool (1) to be dressed.

7. Method according to claim 6, **characterised in that** the width (B_{A}) of the teeth (16) of the dressing wheel (3) engaging with the tool (1) to be dressed corresponds at most to an eighth of the width of the tool to be dressed.

8. Method according to one of the preceding claims, **characterised in that** in the dressing the tooth (16) of the dressing wheel (3) respectively engaging with the tool (1) to be dressed contacts in a punctiform manner the tool (1) to be dressed in at least one of its edge regions.

9. Method according to one of the claims 1 to 7, **characterised in that** in the dressing the tooth (16) of the dressing wheel (3) respectively engaging with the tool (1) to be dressed contacts in a linear manner the tool (1) to be dressed in at least one of its edge regions.

## Revendications

1. Procédé pour modifier la géométrie des flancs de dent d'une roue dentée à l'aide d'un outil qui présente une denture venant en prise avec les dents de la roue dentée pendant un usinage de précision, dans lequel les étapes de travail suivantes sont exécutées:
a. façonnage d'un profil sur l'outil (1) variant sur la largeur (B_{w}) de l'outil (1) en déplaçant une roue de dressage (3) le long du flanc de dent (5) de la dent (6) respective à dresser pendant une opération de dressage, où la largeur (B_{A}) des dents (16) de la roue de dressage (3) venant en prise avec l'outil (1) à dresser est tellement plus petite que la largeur (B_{w}) de l'outil (1) à dresser que la roue de dressage (3) doit être déplacée d'une longueur (L) en une direction Z correspondant à un multiple de la largeur (B_{A}) des dents (16) de la roue de dressage (3) pour balayer la largeur (B_{w}) de l'outil (1) à dresser, et
b. usinage de précision de la roue dentée avec l'outil (1) dressé de cette façon **caractérisé en ce que**
la roue de dressage (3) est déplacée pendant l'étape de travail a) avec une pente changeante et un angle d'intersection des axes (Σ) changeant par rapport à l'outil (1) à dresser afin de reproduire la modification de la géométrie des flancs de dent dans l'outil (1), et **en ce que** l'usinage de précision de la roue dentée dans l'étape de travail b) a lieu en compensant l'angle d'inclinaison de l'outil (1) qui change sur la largeur des dents (16) de l'outil par une modification de l'angle d'intersection des axes (Σ) qui dépend de l'angle d'inclinaison de l'outil (1) pendant le processus d'usinage.

2. Procédé selon la revendication 1, **caractérisé en ce que**, lors du dressage, la roue de dressage (3) étroite et l'outil (1) à dresser sont entraînés en rotation autour d'un axe de rotation respectif (B, C) par l'intermédiaire d'un entraînement respectif propre à commande individuelle.

3. Procédé selon l'une des revendications précédentes,
**caractérisé en ce que**
l'on prévoit des actionneurs à commande individuelle pour régler la position relative de l'outil (1) à dresser et de la roue de dressage (3) en direction (direction Z) de l'axe de rotation (C) de la roue de dressage (3) ainsi que dans une direction (direction X) y étant orientée transversalement.

4. Procédé selon l'une des revendications précédentes,
**caractérisé en ce que**,
pour le basculement de la roue de dressage (3) ou de l'outil (1) à dresser, un actionneur à commande individuelle peut être basculé autour d'un axe (axe Y) orienté radialement par rapport à l'outil (1) à dresser.

5. Procédé selon l'une des revendications précédentes,
**caractérisé en ce que**
l'on prévoit un actionneur à commande individuelle pour régler la position relative dans une direction (direction Y) orientée radialement par rapport à l'outil à dresser.

6. Procédé selon l'une des revendications précédentes,
**caractérisé en ce que**
la largeur (B_{A}) des dents (16) de la roue de dressage venant en prise avec l'outil (1) à dresser correspond au maximum à un cinquième de la largeur (B_{W}) de l'outil (1) à dresser.

7. Procédé selon la revendication 6, **caractérisé en ce que** la largeur (B_{A}) des dents (16) de la roue de dressage (3) venant en prise avec l'outil (1) à dresser correspond au maximum à un huitième de la largeur de l'outil à dresser.

8. Procédé selon l'une des revendications précédentes,
**caractérisé en ce que**,
lors du dressage, la dent (16) de la roue de dressage (3) venant respectivement en prise avec l'outil (1) à dresser est, dans au moins une de ses zones de bordure, en contact ponctuel avec l'outil (1) à dresser.

9. Procédé selon l'une des revendications 1 à 7,
**caractérisé en ce que**,
lors du dressage, la dent (16) de la roue de dressage (3) étant respectivement en prise avec l'outil (1) à dresser est, dans au moins une des ses zones de bordure, en contact linéaire avec l'outil (1) à dresser.
